# EUROPEAN PATENT SPECIFICATION

(11) **EP 3 823 891 B1**
(45) Date of publication and mention of the grant of the patent: **07.10.2026**
(21) Application number: 18746854.1
(22) Date of filing: 16.07.2018
(51) Int. Cl.: B63C 9/01, B64C 39/02

(54) **METHOD AND DEVICE FOR RESCUE MISSION ASSISTANCE**
VERFAHREN UND VORRICHTUNG ZUR UNTERSTÜTZUNG EINES RETTUNGSEINSATZES
PROCÉDÉ ET DISPOSITIF D'AIDE À UNE MISSION DE SAUVETAGE

(43) Date of publication of application: 26.05.2021
(73) Proprietor: TELEFONAKTIEBOLAGET LM ERICSSON (PUBL), 164 83 Stockholm (SE)
(72) Inventor: ÖKVIST, Peter, 973 41 Luleå (SE); ARNGREN, Tommy, 954 42 Södra Sunderbyn (SE)
(74) Representative: Ericsson
(86) International application number: PCT/EP2018/069247
(87) International publication number: WO 2020/015810

(56) References cited:
- FR-A1- 3 054 998
- US-A1- 2014 111 332
- US-A1- 2018 194 445
- US-B1- 9 809 307
- S. P. YEONG ET AL: "A Review On Marine Search And Rescue Operations Using Unmanned Aerial Vehicles", INTERNATIONAL JOURNAL OF MECHANICAL, AEROSPACE, INDUSTRIAL, MECHATRONIC AND MANUFACTURING ENGINEERING VOL:9, NO:2, 2015, 31 December 2015 (2015-12-31), pages 396 - 399, XP055572400, Retrieved from the Internet <URL:https://pdfs.semanticscholar.org/a96d/510202fa13ad580323bfe533dec273912201.pdf> [retrieved on 20190321], DOI: 10.5281/zenodo.1107671

## Description

### Technical field

A method and a device for assisting in a rescue mission, comprising providing floatable foam and recognizable means to a body or object.

### Background

Unmanned Aerial Vehicles (UAVs), are used in a wide variety of applications throughout society, such as e.g. for providing delivery services, for proving aerial photography services and participation in film making, execution of remote sensing tasks in areas such as e.g. agriculturing, civil engineering and city planning, and for providing support for public safety and rescue services. There are many different types of UAVs available on the market that can be remotely controlled, using WiFi or some proprietary radio technology. Such UAVs are capable of establishing radio communication, sensing data via data sensor, as well as performing autonomous operations. In addition, there are UAVs available on the market which are configured for analyzing data collected via data capturing means, such as e.g. data sensors and cameras. UAVs can also operate as relay stations between ground-based terminals and a network base stations, in order to extend the operational area of a communication network.

When executing rescue missions over open water, it is much more difficult to locate and detect people in distress, compared to missions in ponds and close to a beach area. Given that it takes time to reach, localize, and identify people in distress, to provide floating support to people in distress, and that time is critical for a non-lethal outcome of a rescue or a Search and Rescue (SAR) mission, new methods for shortening the time to rescue people from open water is required. One example of a project, focusing on new industrial solutions applicable for the public safety are can be found at, http://wasp-sweden.org/demonstrators/wara-ps-public-safety/, which includes research on UAVs to be used in rescue missions.

Life saving equipment used today, such as e.g. lifebuoys and life jackets may be equipped with whistles, led lights or even electronic chips, designed for locating people in distress. A life west, comprising an electronic locator is described https://www.yankodesign.com/2016/06/13/smart-survival-at-sea/.

However, for persons that have not been able to put on a lifebuoy or life jacket, before having to enter water it is normally very difficult to acquire such floating aid once in water, especially in situations when there are no people available to assist the person in distress.

### Summary

It is an object of the present document to address, or at least to some extent alleviate, the problem described above.

Therefore a method for a UAV for assisting in rescue missions, specifically over open water, and a UAV, especially adapted for the mentioned method is suggested.

More specifically, according a first localization of at least one body or object, followed by an initiation of an analysis, for determining, at least partly based on the first localization of the at least one body or object, a need for activities, and an initiation of determined activities, comprising applying floatable foam to an area on, or in close proximity to, the at least one body or object, such that the floatable foam transforms from liquid to solid form, while applying, a recognizable means, capable of assisting in a second localization of the at least one body or object, to the floatable foam.

By applying the suggested method, a body or object can be provided with a combination of floatable foam and recognizable means, from a UAV, which, is capable of assisting a plurality of bodies or objects with both floatable aid after the bodies and objects and/or means have been found a first time, wherein the recognizable means are capable of assisting in localization a second time.
US20180194445 A1 refers to a drone, comprising a collapsible floating device, which is configured to patrol over swimmers and to drop the floating device over a swimmer in distress. US 2014/111332 A1 shows an example of drone that can release a tracking device.

According to another aspect, a UAV, capable of assisting in a rescue mission, as suggested above, is suggested. More specifically, the UAV comprise a foam container, capable of carrying floatable foam, the UAV further comprising processing circuitry and a memory, storing instructions, which, when executed by the processing circuitry, cause the UAV to initiate a first localization of at least one body or object, after which an analysis, for determining, at least partly based on the localization of the at least one body or object, a need for activities, is initiated. The determined activities are then initiated, wherein the initiation of activities comprise applying floatable foam to an area on, or in close proximity of, the at least one body or object, such that the floatable foam transforms from liquid to solid form, while applying, recognizable means, capable of assisting in a second localization of the at least one body or object, to the floatable foam.

According to yet another aspect, A computer program product comprising a computer program, where the computer program comprise is suggested, which when run on a computer causes the computer to execute a method described above.

According to another aspect, a system, comprising a UAV and an active, recognizable device, is suggested, where the system comprise: a capturing unit for initiating a first localization of at least one body or object; an analyzing unit for initiating an analysis, for determining a need for activities, at least partly based on the localization of the at least one body or object, and an initiating unit for initiating, based on the determination, activities, comprising applying, via a first releasing unit floatable foam to an area on or in close proximity of the at least one body or object, while applying, via a second releasing unit, to the floatable foam, the active, recognizable device, capable of assisting in a second localization of the at least one body or object.

### Brief description of drawings

Embodiments will now be described in more detail in relation to the accompanying drawings, in which:
Figure 1a is an illustration of a person in need, who has been discovered by a UAV.
Figure 1b is an illustration of a discovered person in need, on which floatable foam has been attached by a UAV, according to one embodiment.
Figure 1c is an illustration of a discovered person in need, to which floatable foam has been provided by a UAV, according to one embodiment.
Figure 2 is a system overview, illustrating a UAV, capable of finding a body or object and of providing floatable aid to a found body or object.
Figure 3a is a flow chart, illustrating a method for assisting a body or object with floatable aid.
Figure 3b is another flow chart, illustrating some steps of the method according to Figure 3a in further detail.
Figure 4 is a signalling scheme illustrating a typical scenario where a UAV is finding and assisting a person in need.
Figure 5a is a block scheme, illustrating a UAV according to one embodiment.
Figure 5b is another blocks scheme, illustrating a UAV according to another embodiment.

### Detailed description

Briefly described, a method for using an flying device, referred to as an Unmanned Aerial Vehicle (UAV), or a drone, in a rescue mission is provided, where the UAV is capable participating in a rescue mission over open water, with the capability of providing floating aid together with assistance for simplifying localization. More specifically, this is achieved by applying floatable foam that is in the form of a floatable buoyance foam, from hereinafter referred to as floatable foam, to one or more human beings and/or animals, from hereinafter referred to as bodies, and/or objects, such as e.g. floatable cargo, where the foam is applied on or in close vicinity of one or more bodies and/or objects. By introducing the suggested method and UAV, more people and cargo can be saved with less effort required. Due to its lightweight properties, use of floatable foam, carried in liquid form before release into air, will also provide floating aid for more people and cargo, compared to if a corresponding amount of life wests or other types of floating aid were to be carried and provided to the scene of a rescue mission.

The floatable foam to be used can be any type of known sprayable foam, that, when released from a container where the foam is kept under pressure, transforms from a liquid to a solid form, and provide insulating and floatable properties. The foam can be of a known type, typically used for insulation purposes. In order to obtain further improved buoyance properties a larger amount of air can be applied into the foam than what is normally required when used for insulation purposes only, when the foam is released from the container. The mentioned foam is typically made of polyurethane or a composition having corresponding buoyance properties and possibly also insulating properties. Preferably a foam also having relatively short time to quench is selected for the mentioned purpose.

In addition to releasing floatable foam to a site where there is a need for releasing floatable aid, the foam is also provided with means which can simplify localization of the foam, and the one or more bodies and/or objects to which the foam has been provided or attached. From hereinafter such means is referred to as recognizable means. The recognizable means is adapted so that, later it can assist a device, typically other than the mentioned UAV, a vehicle, such as e.g. a helicopter, submarine or vessel, such as e.g. a coast guard vessel, to localize the recognizable means. The UAV may also be capable of acquiring data from the recognizable means and/or exchanging sensor data and/or computer readable instructions between the UAV and the recognizable means, in case the recognizable means is provided as an active, recognizable device, as will be described in further detail below. The UAV may also be capable of storing and/or analysing acquired and/or exchanged data. Thereby acquired data may either be analysed by or with assistance from the UAV, or it can be stored for later manual or automatic analysis, so that the outcome of such an analysis can be used for providing assistance during the continuing phase of the initiated rescue mission.

Since the required time for localizing people and/or animal in the water the second time may be decisive for whether the people and animal will be alive or not once the rescue mission arrives, or whether cargo can be collected before it is destroyed by the water, it is essential that assistance for localizing the recognizing means is as efficient and accurate as possible. Known foam, as described above is releasable in a form where it is capable of fixing the recognizable means to the foam, as well as to the body or object to which the foam is attached. Yet another advantage with combining the use of floatable foam and a recognizable means is that the foam, in addition to insulating properties also will provide protection against physical impact of the recognizable means. Due to at least the latter advantage, it is to be understood that, in case active, recognizable means is used, also floatable foam with insufficient floating capacity for keeping a body floating may still be very useful in a rescue mission, as described herein, e.g. due to the adhesive properties in combination with the ability to protect the active, recognizable device from physical damage may be sufficient e.g. for attaching and maintaining active, recognizable means to a body. The latter scenario may be acceptable e.g. in a situation where people in need already are equipped with a life west or other buoyancy aid, but still are in need of active equipment for assisting in future localization.

In a typical scenario, foam will be applied as repeated layers on or around one or more bodies or objects, e.g. by the UAV circulating around a body or body part repeated number of times, thereby allowing also the amount of protection against physical impact to be controllable.

To sum up, the UAV described herein will be capable of providing floatable foam to a body or object, of attaching an recognizable means, which may be either passive, active, or a combination of both, to the floatable foam, and may also participate in a data exchange between the UAV and an active, recognizable device, where the latter procedure may have a purpose of acquiring more data, representative for the rescue mission, of providing data, which may include instructions, when activating an active, recognizable device in a suitable way, according to the circumstances.

Although the embodiments presented herein are referring to assistance over open water, it is to be understood that the suggested solution may also be applicable in a scenario where no buoyancy aid is required, but only attachment of an active recognizable device to a body is sufficient, i.e. an adhesive foam is required, possibly in combination with foam that provides protection against physical impact of recognizable means, when provided as a recognizable, active device.

The floatable foam may be provided on, around or in close vicinity of a respective body or objects, or group thereof. Extruding, floatable foam can be applied from a lightweight container, by controlling means of the UAV, via a suitable, controllable nipple, typically constructed so that air, giving the foam improved buoyance properties. The floatable foam can be arranged in loose or free form. Alternatively, the floatable foam can be released into a suitable, dedicated container, such as e.g. a thin, releasable rubber cover, inflatable into a predefined shape.

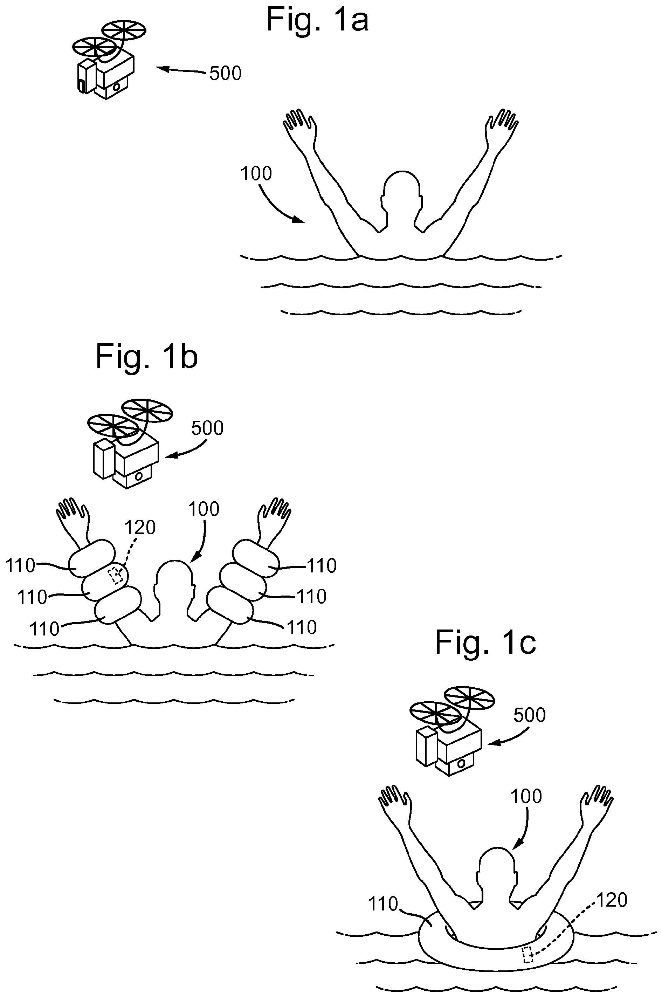

Figure 1a is illustrating a scenario where a person in need 100 has been recognized and localized by a UAV 500, adapted as described herein. Once the person in need 100 has been localized, the UAV 500 will make use of captured data, and may also initiate capturing of additional data, for determining if release of floatable foam and recognizable means is required for the person in need 100, e.g. based on the outcome of image processing.

Figure 1b is illustrating how the UAV 500 has determined that floatable foam and recognizable means is required for the person in need 100. Acquired data has been analysed for determining how to best apply floatable foam 110 to the arms of a person in need 100, and recognizable means, here in the form of an active, recognizable device120, has been embedded into the floatable foam 120 by the UAV 500. In the present scenario the floating foam 110 has been applied around the arms of the person in need 100, allowing the floating aid to sit tight to the body or object.

Figure 1c is illustrating an alternative scenario where the UAV 500 has selected an alternative way of applying floatable foam 110 to the person in need 100. In the scenario of figure 1c the person in need 100 is circumvented with floatable foam 110, comprising an active, recognizable device 120 embedded into the foam. The latter approach may also be the preferred approach if providing one set of floatable foam to a group of persons in need. It is to be understood that the UAV 500 may floatable apply a plurality of alternative approaches when it comes to the form of the floatable foam that is being released, such that e.g. floatable foam is provided in the form of a straight line of floatable next to a line of people drifting in the water.

The UAV can be referred to as a device, executing a first instance of a rescue mission at sea, capable of providing floating aid and recognizable means, whereas a device, vehicle or vessel which finally completes the rescue mission can be referred to as a device, vessel of vehicle, executing a second instance of the rescue mission, when bodies and cargo can finally be evacuated from the water. In a typical scenario, the first instance is executed by an autonomous UAV, where no, or minimal, human interaction is needed, or very likely not even available, whereas the second instance typically involves human individuals, such as e.g. rescue personal, or personal of a commercial cargo ship, who can make use of the assistance that the recognizable means can provide, when bodies and/or objects that have previously been assisted at the first instance are localized a second time. An advantage with applying both instances, one at a time, is that an autonomous UAV will be able to reach a site much faster than the personal of the second instance, thereby increasing the potential of saving lives and cargo or goods.

Consequently, the suggested method enables localization of bodies and/or objects, provided with floatable aid and recognizable means in a quicker and more efficient way, since a relatively large volume of floatable foam can be carried by the UAV, compared to if conventional floatable aid, such as e.g. life wests or lifebuoys were to be provided by a UAV to e.g. a group people or cargo, drifting around on the sea surface. Furthermore, the combination of floatable foam and recognizable means also provide for a more robust and reliable operation of the recognizable means, thereby increasing the likeliness of re-localization of bodies and objects drifting on e.g. a waste ocean. In addition to the information that can be captured from an active, recognizable device at the instance of localization, data captured, stored and possibly also analysed at the instance of release of floatable foam and recognizable means, or at a later occasion, can further assist in simplifying rescue, e.g. due to that the area of search can be selected and limited with improved accuracy.

The recognizable means may, according to one embodiment, be passive means, such as e.g. fluorescent paint, or micro metallic flakes, which may later be recognized visually or electronically. According to another embodiment, the recognizable means is instead provided as some kind of active means, in the form of an active, recognizable device, such as e.g. a device capable of emitting LED (Light Emission Diode) light, acting as a stroboscope, a device having transponder functionality, such as e.g. a SART (Search And Rescue Transponder) a PLB (Personal Location Beacon), or an EPIRB (Emergency Personal Indication Radio Beacon).

An active, recognizable device, is typically provided as a waterproof container, provided with conventional processor circuitry or electronics which can be activated by the UAV on or after being embedded into floatable foam, as well as a memory for holding computer readable instructions, and communication means for enabling communication with the UAV. The active, recognizable device may, in addition to being able to receive data from the UAV, be configured to emit more or less informative information representative of the situation when the mentioned recognizable means is initially applied to the foam. Alternatively, it may be configured to emit information relevant for upcoming movement patterns, such as e.g. estimated drift from the occasion of releasing of the foam.

The latter scenario may include collection of sensor data, such as e.g. one or more of: data indicative of underwater currents, speed and direction of wind and wave height, or various types of meteorological data, from one or more sensors, applied on the active, recognizable device. Relevant data may alternatively be collected by sensors of the UAV, the recognizable device or by a combination of both. Data collected by the active, recognizable device can be transmitted to the UAV in a data exchange procedure, initiated by the active, recognizable device or the UAV, and relevant data, now available to the UAV, can be analysed by the UAV, or, in case the UAV is able to connect to an available communication network, collected data can be transmitted to analysing functionality via the communication network, after which the result of the analysis can be provided to the active, recognizable device, as data to be emitted by the active, recognizable device on a continuous basis, or with suitable intervals.

Alternatively, collected analysed or un-analysed data, or a combination of both, can be stored and kept at the UAV for later use, e.g. for directing a rescue mission to an area where bodies or objects are most likely to be found.

The described first stage, which is typically terminated when the UAV leaves the emergency scene, may also comprise a data exchange of instructions between the UAV and an active, recognizable device, where, e.g. based on data analysis, completed by the UAV, the UAV may activate the active, recognizable device, i.e. initiate emission of data and instruct the active, recognizable device what data to emit and how to emit the data, such as e.g. at which intervals to emit. A number of different approaches on how to emit and what data to emit may be applied, depending on the circumstances. According to one embodiment, emission of a specific message may be delayed a certain time, or limited to specific time intervals, e.g. for saving battery.

At the second stage of the described rescue mission, starting at the instance of detection of the one or more bodies and/or objects a second time, the recognizable means may help rescue personal and/or electronic equipment, capable of identifying such passive or active recognizable means, to localize the one or more bodies and/or objects. At such an occasion, localization may be based only on recognized emitted data, indicative of the situation when the foam and recognizable means was released, or the emitted data may also comprise data indicative of data collected and analysed also some time instance after the release, but before the UAV left the one or more bodies and/or objects.

The UAV is configured as a controllable or autonomous UAV, which may be stationed e.g. on a boat or on any type of sea-going or flying vehicle or vessel, for quick, automatic or manual activation, in case of an emergency at sea, or it may be located at shore, from where it can be launched, e.g. based on an alarm of an emergency at sea, or due to a manual activation. How to trigger activation of the UAV or how to perform the autonomous search of a search area is out of the scope of this document, but the UAV may typically be provided with means, capable of searching and identifying floatable bodies or objects. From hereinafter such means will be referred to as capturing means, capable of capturing visual and/or audio data, which, after processing or analysis can be used for identifying and localizing one or more bodies and/or objects.

Capturing means is typically a camera, such as e.g. a warm sensitive camera, capable of selectively identifying bodies at sea, or a video camera, capable of sensing waving of human beings, while a microphone may be provided for capturing and interpreting speech or cries from human beings, as human beings expressing a need of a rescue. Various data sensors can provide additional input, which may be used for simplifying analysis of the situation and activities to be initiated.

In addition to one or more capturing means, the UAV is provided with processing or analysing means which is capable of interpreting input, provided from the recognizing means, possibly in combination with data from data sensors of the UAV, the recognizable means, or both, so that a decision on how to arrange the floatable foam over or adjacent to bodies or objects can be executed in an efficient way. Data captured by recognizing means may include one or more of: captured picture data, captured speech and captured sensor data, such as e.g. estimation of distance to a body or object, which data can be interpreted by applying any of image recognition, speech recognition, evaluation of sensor data alone, or in a combination thereof

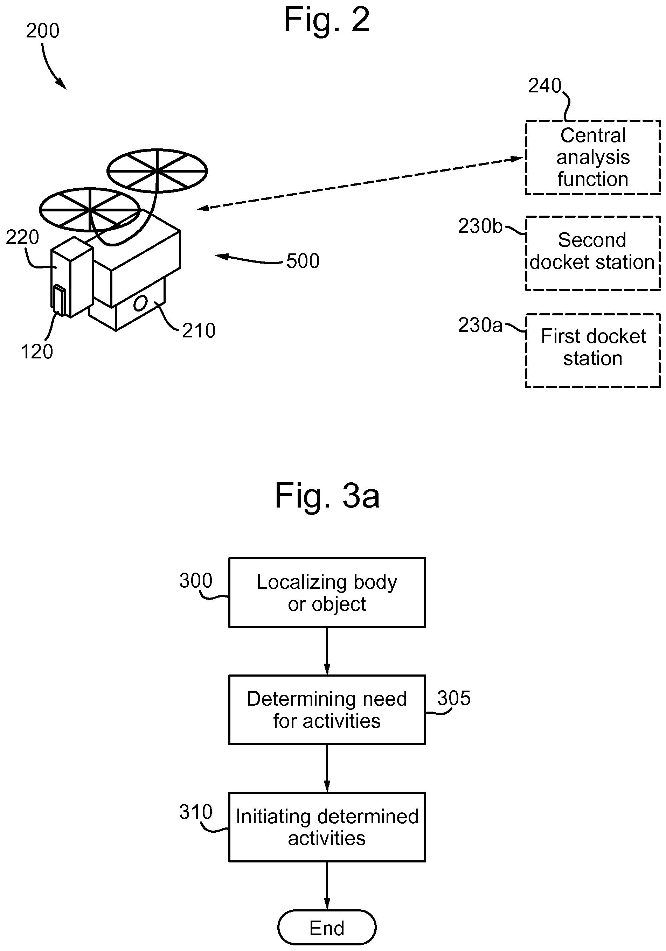

A system 200, capable of operating as suggested herein, can be arranged as is illustrated in Figure 2, where a UAV 500 is equipped with one or more capturing means 210, here in the form of a camera, a floatable foam releasing means 220, comprising, or connected to a foam container, containing floatable foam, and recognizable means, here illustrated as an active recognizable device 120, provided so that it easily can be released from the UAV 500 and attached, and incorporated into released, floatable foam. Since an active, recognizable device 120, configured according to any embodiment disclosed herein, can be configured in a very small and light weighted form, a UAV 500 can easily be configured to carry a number of recognizable devices 120 (not shown), which can be released one by one, each time a certain amount of floatable foam is released. The system 200, typically also comprise a first docking station 230a, from which the UAV 500 is initially launched, and may also comprise a second docking station 230b, to which the UAV 500 is destined to fly, after having completed the first part of the described rescue mission and which provides network access to the UAV 500. According to one alternative embodiment, the UAV 500 is configured or controlled to fly to and dock at a location where it has access to a communication network, either directly via the docking station, or via an access network, within coverage of any of the docking stations 230a,230b. In both alternatives, the UAV 500 is capable of providing stored data, representative of the rescue mission, to a rescue centre (not shown) or any type of receiving entity, capable of receiving, interpreting and making use of the provided data, for the purpose of completing the rescue mission. According to yet another alternative, or in combination with any of the previous alternatives, the first docking station 230a is configured to allow the UAV 500 to return to it for automatic replacing or reloading of foam containers and/or active, recognizable devices120. Thereby, even a sinking vessel, containing a first docking station 230a with reloading facilities can be maintained in use also after people have been forced to leave the vessel, thereby increasing the amount of floatable foam that can be released before the vessel is below water surface. Typically the first docking station 230a is capable of, or connected to, means for triggering initiation of the described rescue mission, either on a manual basis or automatically, based on an alarm.

In case the UAV 500 lacks some or all of the required analysis functionality, such functionality may be instead executed by a central analysis function 240, to which the UAV 500 has connectivity. Alternatively, the UAV 500 may use a central analysis functionality 240 when the UAV 500 it has access to it, while it is using its own analysis functionality at any other time, e.g. in order to save battery. The central analysis function 240 may either be accessible via any type of wireless communication, or by the UAV 500 docking with a docking station, such as e.g. the second docking station 230b, if connected to the central analysis function 240.

As has already been implied above, the mentioned, autonomous UAV 500 will be pre-configured to execute certain event-triggered activities after an alarm has been initiated, manually or automatically, some of which activities will be exemplified below:
- Initiate search for body or object in the water circumventing the vessel on which the UAV is stationed, by initiating a search scheme and activating one or more recognizing means, and optionally also one or more sensors of the UAV.
- Initiate analysis of data captured by recognizing means, possibly in combination with input from one or more sensors, for determining if there is a need for releasing floatable foam and recognizable means.
- In case it has been determined that there is a need for floatable foam and recognizable means - initiate analysis of captured data for determining a preferred strategy for applying floatable foam and recognizable means.
- After a preferred strategy for applying floatable foam and recognizable means has been determined - initiate a process for applying floatable foam and recognizable means.
- After having applied floatable foam and recognizable means, initiate one or more of: capturing sensor data from one or more sensors of the UAV, in case the recognizable means comprise an active recognizable device, activate the recognizable device and instruct the recognizable device to perform one or more tasks and performing data exchange between the recognizable device and the UAV.
- After, or parallel to, receiving data from sensors of the UAV and/or from a recognizable device, initiate analysis of the acquired data, storing the result of the analysis, and, optionally, initiating one or more of: capturing further data, instructing recognizable device to perform one or more tasks based on the result of the analysis and initiate further analysis of acquired data.
- After having completed release of foam and recognizable device and activation of recognizable device, initiate localization of other body or object.
- When out of at least one of floatable foam and recognizable devices - initiate flight to docking station on vessel for reloading of floatable foam and/or recognizable devices.
- When in need of analysing capacity - initiate flight to location indicated as providing access to central analysis function and initiate analysis process. If required, initiate flight back to rescue scene when analysis has been completed.
- After having completed data capturing and processing of captured data - initiate flight to any of a pre-defined docking station or an area providing expected network coverage.
- After having docked - connect to rescue centre or other predefined end point for delivery of captured, stored, and possibly also analysed data.

A method to be executed by a UAV as described above, will now be described in further details, with reference to Figure 3a.

According to a first step 300, the UAV is initiating a localization of at least one body or object. This is done by using one or more capturing means, such as e.g. a heat-sensitive camera, when searching an area where it has received an indication of at least one body or object for which floatable aid is needed. The mentioned localization procedure is executed by interpretation and analysis of input from the capturing means, applied by the UAV by applying analysing functionality. In case the UAV is equipped with also a microphone, input from the microphone may be used for recognizing and analysing speech of a person in need of assistance. Speech recognition may e.g. assist the UAV in making more efficient prioritizations on how to apply floating foam and recognizable means. Alternatively, the UAV may also be equipped with a loudspeaker or visual means, which can be used for setting up a dialogue between the UAV and a person in need, in order to be able to collect and consider more information, essential for the present situation, which can be useful for determining how to apply the floatable foam, and possibly also for what information to emit by recognizable means, in case an active, recognizable device is applied. Such a dialogue may also be applied for instructing a person, or a group of persons in need on how to best behave and handle the situation, until rescue staff arrives.

In another step 305, a further analysis for determining whether or not a need for activities, including releasing and applying floatable foam with recognizable means, are needed, is executed. The mentioned further analysis is, at least partly, based on the already achieved localization. Further activities, which may be triggered at this stage, may include e.g. activation of data sensors on the UAV and/or an active, recognizable device, activation of a wireless connection between the UAV and the active, recognizable device, so that sensor data and/or instructions can be transmitted between the two entities, before the UAV leaves the scene for other tasks, such as e.g. assisting another body, object or group of bodies and/or objects.

Data captured by the capturing means can, according to one embodiment, be applied in a determining process, capable of applying Machine Learning ( ML). More specifically, the captured context, which may include e.g. image recognition, movement patterns, word recognition and/or analysis of data captured by data sensors, can be interpreted as calling for a need for floatable aid, here in the form of floatable foam, and as a demand for a certain amount and form of floatable foam. A combination of data captured from a plurality of bodies and/or objects may be interpreted as calling for grouping together bodies and/or objects into suitable groups, e.g. based on the geographical distribution of bodies and/or objects on the water surface, where each group is provided with a suitable amount of floatable foam, applied according to a certain pattern. By applying ML on captured data, the recognizable means, if applied as an active recognizable device, can be activated and adapted accordingly. The mentioned analysis may also be based on additional input, such as e.g. one or more of an identity or category of a body or object, such as e.g. a recognizable label of the clothes or an electronically emitted, and detectable identity or category, which information can be used to simplify determination of needed activities. Typically the amount of floatable foam to be applied by the UAV may depend on one or more of the number of bodies and/or objects in need of support, estimated weight, relative position on the water surface and distance to shore and/or rescue personal. Picture analysis or image recognition, may also be applied for determining which of persons in distress that already appear to wear a life west or any other type of floatable device, thereby determining e.g. that only recognizable means need to be applied to a person in need. Given a limited amount of foam, the amount and form of foam to be released at each instant may need to be optimized in order to minimize the per-body/object/group overhead. Also considerations, such as e.g. water temperature, air temperature, wind, type of waves, water conditions, such as e.g. pond, lake or ocean or calm or rough sea may be considered, for such optimizations. As a consequence, there will typically be trade-offs when determining whether to provide foam on an individual or on a per group basis.

Apart from using ML for determining how to best apply floatable foam, ML may also be used for how to best activate, or configure, the recognizable means, including e.g. how to collect and exchange data and which emission intervals to apply, once the active, recognizable means has been released and activated by the UAV.

In yet another step 310, the determined one or more activities, including at least applying of floatable foam to at least one body or object and applying the determined type of recognizable means to the foam, are initiated in appropriate order, so that the recognizable means is configured to operate as required, based on the analysis made in the previous step. The analysis of step 305 typically comprised, estimating the amount and/or form of floatable foam that is required for a body, object or group thereof, but may also comprise determination of need for additional data capturing and exchange of data and/or instructions. In the latter scenario, step 310 comprise release of floatable foam, according to the analysis.

The method described above is typically repeated until all bodies and objects requiring floatable aid have been handled accordingly and the UAV can initiate a flight to a docking station or to an area where it can get network access.

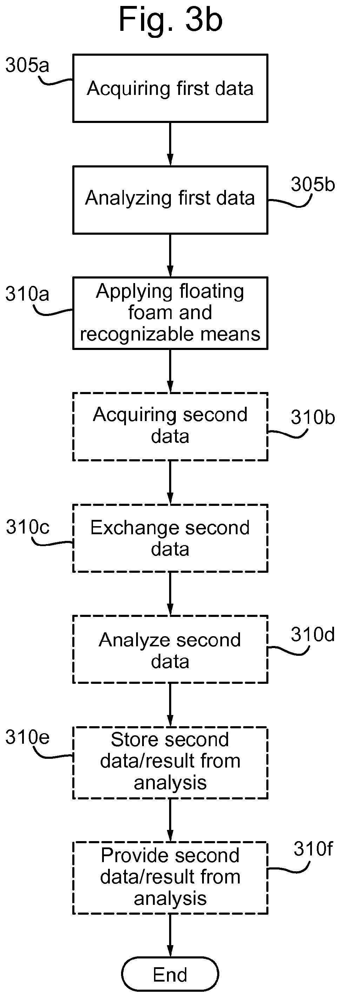

Figure 3b is illustrating steps 305 and 310 of Figure 3 in further detail. Step 305a of Figure 3b describes how need for activities is determined by acquiring data, here referred to as first data, by applying available capturing means, whereas the acquired first data is being analysed in a second step 305b, wherein the analysis will result in determination of whether or not there is a need for any activities. The result of the analysis will typically not only be that floatable foam and recognizable means are needed, but also in what form floatable foam will be provided and how the recognizable means will be activated, or configured. Alternatively, the activation of the recognizable means, in case of using an active, recognizable device, may require further activities to be initiated and completed, before an activation of the device can be considered as completed.

Once it has been determined that activities are indeed needed, required activities need to be initiated. As indicated with step 310a, floatable foam and recognizable means is always applied, as indicated with step 310a. It is to be understood that the described method may end at this stage, i.e. after the floatable foam and recognizable means has been applied, in case passive recognizable means is applied.

However, in a typical scenario, involving an active, recognizable device, further data exchange, possibly in combination with relevant data analysis, storage and possibly also delivery of the result of the analysis, may simplify for execution of upcoming steps of the rescue mission even further.

As indicated with optional step 310b, another activity may be to acquire further data, here indicated as second data. Such data may be acquired from data sensors of the UAV itself, requested and received from data sensors of an active, recognizable device, in a data exchange process, as indicated with another optional step 310c, or a combination of both may be required. In case step 310b and/or step 310c are executed, further data analysis will be needed, as indicated with another optional step 310d, and according to yet another optional step 310e, data resulting from the analysis of step 310d, may be stored at the UAV for later delivery e.g. to a docking station or to a central analysis function, as indicated with optional step 310f. It is to be understood that optional steps 310b-310f may be repeated one or more times, depending on how much data that is to be collected and analysed and how much data that is required before an activation of an active, recognizable device can be completed.

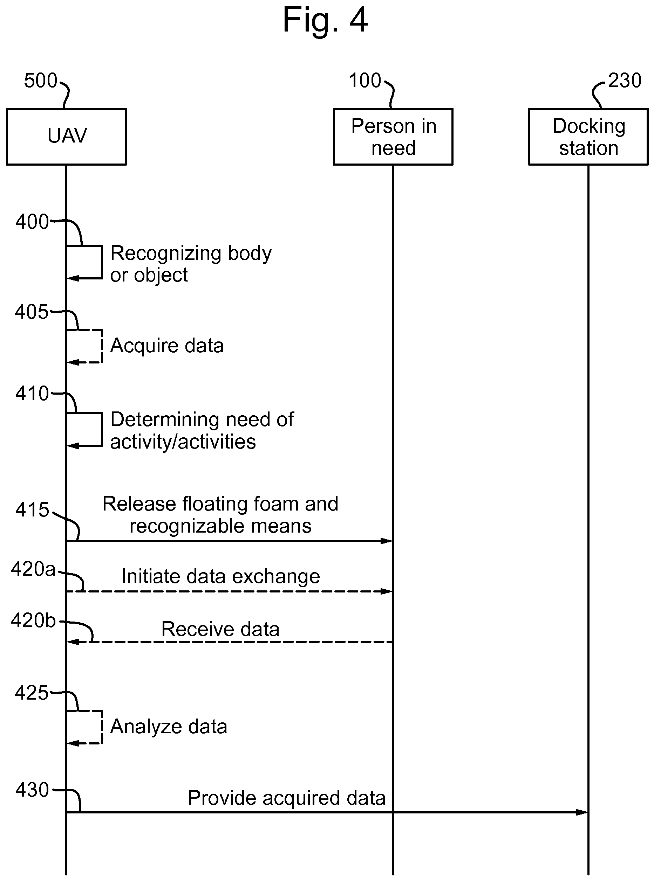

A typical scenario of a first part of a rescue mission, according to one embodiment where a person is in distress, will now be described in further detail, with reference to the signalling scheme of Figure 4. As a pre-requisite, it is to be understood that an alarm, or any other manual or automatic trigger, has triggered a UAV, having capabilities as described herein, to search for a person in need or distress.

In a first step 400 of Figure 4a, UAV 500 is recognizing a person in need 100, with the help of available capturing means. Based on an analysis of captured data, the UAV 500 is capable of determining a need of certain activities or actions, as indicated with another step 410, where it is determined that the person in need 100 is at least in need of floatable foam, provided with recognizable means. Prior to the determining at step 410, including an analysis, further data required for the analysis may be acquired from data sensors of the UAV 500, as indicated with optional step 405. Following step 410, floating foam and recognizable means, here exemplified by an active, recognizable device (not shown), are released, and the active, recognizable device is activated, according to the analysis, as indicated with another step 415. Once the floating foam and the active recognizable device have been released, further sensor data can be acquired by the UAV, from the active recognizable device, as indicated with step 420a, and 420b, where data is requested and received. In the latter scenario, the activation of the active, recognizable device is not completed until all necessary data has been exchanged accordingly. The latter data exchange may e.g. be executed by setting up a short range connection between UAV 500 and the active, recognizable means 120, by applying a known short range communication protocol, such as e.g. Bluetooth, WiFi, D2D or Zigbee. Step 415, possibly in combination with steps 420a and 420b, also includes an activation of the active, recognizable device. Activation is to be construed as initiating a transfer from passive to active mode of the active, recognizable device, where acquired data can be used for adapting the functionality of the active, recognizable device accordingly.

As already mentioned, although not shown in Figure 4, further data may also be acquired from data sensors of the UAV 500. The sensor data acquired at this stage may e.g. comprise meteorological data, indicative of the rescue situation. In another optional step 425, acquired data may be analysed e.g. in order to predict the drift of the floating foam and the active, recognizable device, whereas in another step 430, acquired data and/or data that has been analysed, based on acquire data, is provided to an entity which has network connectivity, here represented by a docking station 230.

Any of steps 415 to 430 may be repeated until sufficient data has been acquired and analysed. By way of example, the UAV 500 may e.g. follow an active, recognizable device for a certain amount of time, e.g. by predicting the drift of the active, recognizable device, thereby enabling e.g. a more reliable prediction of the drift of the active, recognizable device.

How to apply the floatable foam is based on the result from the initial analysis of the present situation and the determined need at the site. Depending on the circumstances, the floatable foam may be provided to individual bodies and/or objects, to groups of bodies and/or objects, or as a combination thereof, based on a captured data. Typically each body/object or group of bodies/objects, will be provided with a respective recognizable means, but, e.g. in case of fewer recognizable means than bodies/objects in need, recognizable means may be provided e.g. every third time floatable foam is released. The suggested exchange of data may also comprise transmission of data from the UAV, such as e.g. a hash value or a code, which can later be interpreted to represent e.g. one or more of a certain amount of people and a location. Data acquired from the UAV or an active, recognizable device may comprise e.g. date, time of day, position when floatable foam is applied, estimated type of object or category of body for which floatable foam has been applied, such as e.g. adult, child, toddler, animal or pet, suitcase, container, number of objects or bodies carried by a piece of floatable foam, estimated health status, such as e.g. alive, injured or unclear. Such data may be acquired either by data capturing via one or more data sensors, or via a communication interface, i.e. a combination of presentation and capturing means, such as e.g. a loudspeaker and microphone, which, in combination with an instructing means and the analysing means can execute a dialogue with a person in distress. In a typical scenario, data received by the UAV is also stored at the UAV for later forwarding via a communication network, but in case of network access at the event of rescuing, forwarding of data can instead be executed instantly.

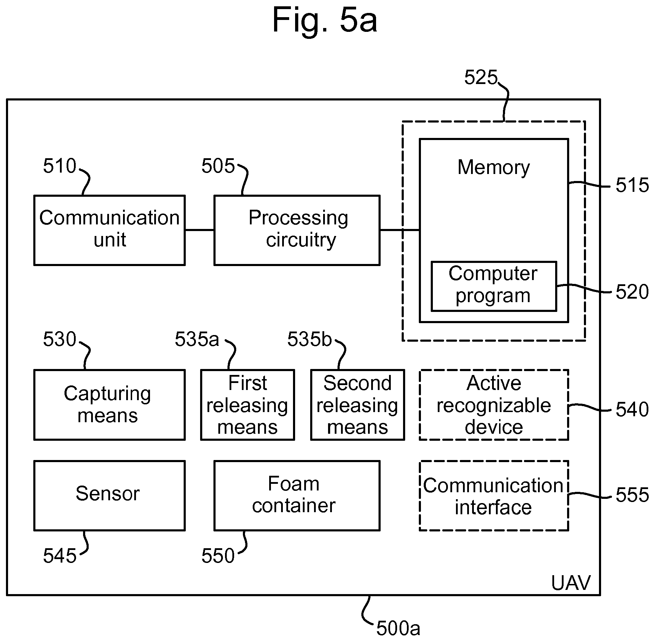

A UAV, capable of executing a method, such as the one described herein and configured according to one embodiment will now be described in further detail with reference to Figure 5a.

Figure 5a is illustrating a UAV 500a, suitable for assisting in a rescue mission, as described herein, wherein the UAV 500a comprise processing circuitry 505 and a memory 515, storing a computer program, comprising computer readable instructions 520. When executed by the processing circuitry 505, the computer readable instructions 520 cause the UAV 500a to execute a process as described above with reference to Figures 3a and 3b. The processing circuitry 505 is provided using any combination of one or more of a suitable central processing unit (CPU), an Application Specific Integrated Circuit (ASIC), a multiprocessor, a microcontroller, a digital signal processor (DSP), and/or application specific integrated circuitry.

The UAV 500a can be caused to initiate a first localization of at least one body or object, based on data input from available capturing means 530. Once at least one body or object has been localized, the UAV 500a is caused to initiate an analysis, for determining, at least partly based on the outcome of the localization of the at least one body or object, a need for certain activities. The analysis may, in addition to the outcome of the localization, also be based on sensor data, provided from one or more data sensors 545 of the UAV 500a. The mentioned analysis may also be based on audible input from a person in need if the UAV 500a is also provided with a communication interface 555, comprising e.g. one or more of a microphone for capturing speech from the person in need, a display for showing instructions and/or questions visually to the person in need and/or a loudspeaker for providing instructions and/or questions in audible form.

The UAV 500a is then caused to initiate the determined activities, where the determined activities comprise at least applying of floatable foam, by activating a first releasing means 535a, initiating release of floatable foam from a foam container 550, according to a determined amount and form, to an area on or in close proximity of the at least one body or object, while applying recognizable means to the floatable foam, by activating a second releasing means 535b, where the second releasing means 535b may be configured to apply passive, recognizing means, e.g. by spraying fluorescent text or code on the floatable foam, or active, recognizable means, wherein the second releasing means is configured to release an active recognizable device 540, while the first releasing means 535a is releasing floatable foam, so that the active, recognizable device 540 is embedded into the foam. In case of applying an active, recognizable device 540, the mentioned instructions 520 also comprise instructions which cause the UAV 500a to active the active, recognizable device, meaning that it causes the active, recognizable device 540 to undergo a transition from passive to active mode, after which the active, recognizable device 540 is capable of starting to emit data according to a pre-defined pattern. More specifically, such instructions will cause the UAV 500a to activate emitting functionality such as e.g. one or more of stroboscopic, Light-emitting diode (LED) functionality, radio communication and transponder functionality.

Furthermore the computer readable instructions 520 comprise instructions which, during the analysis, causes the UAV 500a to evaluate the collected data in an analysing process, and to determine, based on the evaluation, that the floatable foam and the recognizable means are needed for the at least one body or object. The computer readable instructions 520, comprise instructions causing the UAV 500a to determine that floatable foam and recognizable means is applied for one single body or object or for a group of bodies and/or objects. Furthermore, computer readable instructions 520 may cause the UAV 500a to determine a specific amount of floatable foam and a suitable form of the floatable foam, based on the outcome of the suggested analysis. More specifically, the computer readable instructions 520 may cause the UAV 500a to determine suitable amount and form of the floating form, at least partly based on acquired data, where the acquired data may e.g. indicate one or more of: an identity or category of at least one body or object, a geographical distribution of a plurality of bodies and/or objects, together forming a group of bodies and/or objects; a movement pattern of the movement of the at least one body or object; meteorological data, indicative of the meteorological status of an area in which the at least one body or object is/are located.

The computer readable instructions 520 may, according to one embodiment also comprise instructions, which causes the UAV 500a to acquire additional data, either from one of its own sensors 545, from sensors of the active, recognizable device 540, or as a combination of both, where the data is consolidated so that the activation of the active, recognizable device 540 is executed in an optimized way, including a configuration of the functionality of the active, recognizable device 540. For this purpose the computer readable instructions 520 may comprise instructions, which causes the UAV 500A to collect data for determining at least one of: an identity or category of the specific body or object or group of bodies and/or objects, for which the activities have been initiated; a physical status of the specific body or group of bodies, for which the activities have been initiated; the number of bodies and/or objects within a group of bodies and/or objects, for which activities have been initiated, and a meteorological status when the activities have been initiated. The consolidated data may be stored in memory 515, or a separate memory (not shown) of the UAV 500a. The memory can be any combination of read and write memory (RWM) and read only memory (ROM). The memory typically also comprises persistent storage, which, for example, can be any single one or combination of magnetic memory, optical memory, solid state memory or even remotely mounted memory.

For the purpose of acquiring data from an active, recognizable device 540, after it has been released from the UAV 500a, the computer readable instructions 520, comprise, according to one embodiment, instructions instructing the UAV 500a to initiate transmission of data between the UAV 500a and the released, active, recognizable device 540, via a communication unit 510, typically by applying a suitable short-range communication protocol.

In a typical scenario, a UAV 500a, engaged in a rescue mission does not have any radio connectivity, i.e. capability to connect to any radio communication network. Therefore, the computer readable instructions 520, may also, according to one embodiment, comprise instructions capable of causing the UAV 500a to navigate towards a location where the UAV 500a is experiencing radio connectivity, and to provide at least part of the acquired data, possibly including processed data, via the available radio connectivity, e.g. via a 3G, 4G or 5G connection, via communication unit 510, in case that unit is configured to provide both long range and short range connectivity, or a separate communication unit (not shown).

Data analysis mentioned herein is typically executed by combining available data in order to optimize applying of floatable foam, but may also be combined in order to be able to predict e.g. movement patterns of an active recognizable device. The computer readable instructions 520 may therefore also comprise instructions to apply a pre-trained ML model on acquired data. Use of ML in similar contexts are e.g. exemplified in https://spectrum.ieee.org/tech-talk/telecom/wireless/smartphones-will-get-even-smarter-with-ondevice-machine-learning.

According to another aspect, a computer program product 525, is suggested. The computer program product 525, comprises a computer program, i.e. computer readable instructions, which when executed by a computer, here processing circuitry of the AUV 500a, the computer is caused, or configured to, execute a method according to any of the embodiments described above with reference to Figure 3a and 3b. The computer program product 525 is configured in the form of a part of memory 515, or a separate memory (not shown), which may be Read-and-Write (RWM) and Read-only-Memory (ROM). The memory, also typically comprise persistent storage, which may be any single one or combination of a magnetic memory, a solid state memory, or even a remote mounted memory. The computer program product 525 may be provided in the form of e.g. an optical disc, such as a Compact Disc (CD) or a Digital Versatile Disc (DVD) or a Blu-Ray disc.

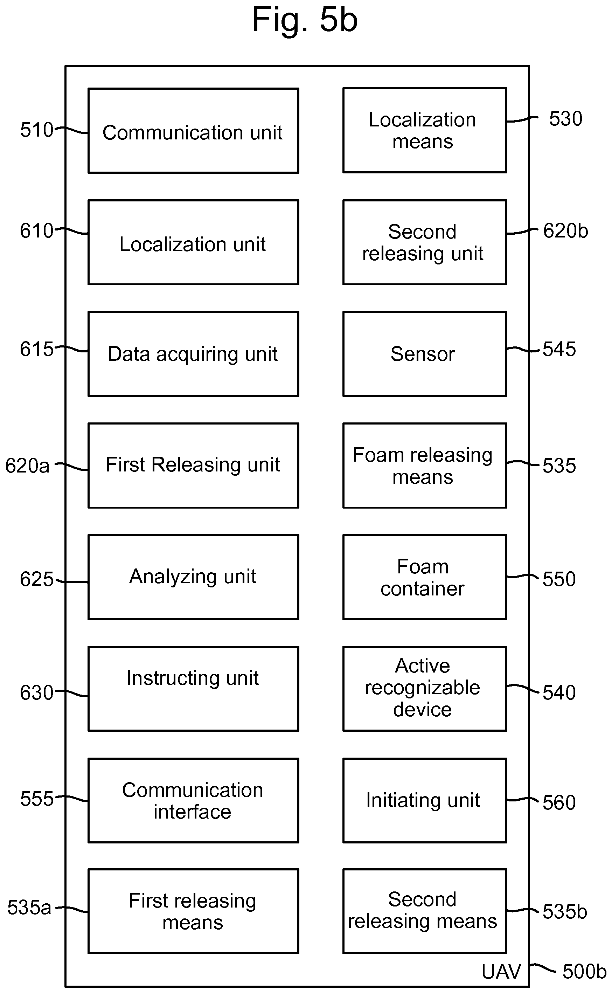

According to another aspect, a UAV 500b can be configured according to Figure 5b, where functionality is provided in the form of various functional units, or modules, each of which can be implemented in software, i.e. as computer readable instructions, stored in a suitable storage, as already mentioned above, in hardware, configured as adapted processing circuitry, such as e.g. ASICS (Application Specific Integrated Circuitry) or as a combination of both. In addition, the UAV 500b comprise hardware, as already described above, with reference to Figure 5a.

UAV 500b comprise a localization unit 610 for initiating a first localization of at least one body or object, based on captured data, captured by one or more capturing means 530, according to step 300 of Figure 3a, an analysing unit 625, for initiating an analysis, for determining a need of activities, at least partly based on the localization of the at least one body or object, according to step 305 of Figure 3a, and an initiating unit 560, for initiating the determined activities, according to step 310 of Figure 3a. The mentioned initiating of activities will comprise comprising at least applying, floatable foam to an area on or in close proximity to at least one body or object, by activating a first releasing unit 620a, while applying, recognizable means, capable of assisting in a second localization of the at least one body or object, to the floatable foam, by activating a second releasing unit 620b. The second activating unit 620b may be configured to release, or apply, passive or active, recognizable means, as already described above. In addition, the initiating unit 560 is configured to activate an active, recognizable device 540, in case active, recognizable means are applied. UAV 500B may set up a radio communication with a radio communication network via communication unit 510 by applying a known radio communication protocol, and may also set up a communication, typically a known short range communication, with an active, recognizable device, by applying a suitable short range communication protocol, via communication unit 510 or a separate communication unit (not shown). In case a dialogue can be set up between the UAV 500b and a person in distress, e.g. by presenting visual text or audible instructions, or a combination of both, such a dialogue may be executed via a suitable communication interface, which can be configured according to well known procedures.

## Claims

1. A method using an Unmanned Aerial Vehicle (UAV), for assisting in a rescue mission, wherein the UAV is:
- initiating (300) a first localization of at least one body or object;
- initiating (305) an analysis, for determining, at least partly based on the first localization of the at least one body or object, a need for activities;
- initiating (310) the determined activities, comprising releasing floatable foam from a foam container into an area on or in close proximity to the at least one body or object, such that the floatable foam transforms from liquid to solid form, while releasing, a recognizable device capable of assisting in a second localization of the at least one body or object, based on data, captured by the recognizable device, so that the recognizable device is incorporated into the floatable foam, and
- wirelessly exchanging data with the recognizable device.

2. An Unmanned Aerial Vehicle (UAV) (500a) for assisting in a rescue mission, the UAV (500a) comprising a foam container, capable of carrying floatable foam, capturing means (530), and a recognizable device, the UAV further comprising processing circuitry (505) and a memory (515), storing instructions (520) which, when executed by the processing circuitry (505) cause the UAV (500a) to:
- initiate a first localization of at least one body or object;
- initiate an analysis, for determining, at least partly based on the localization of the at least one body or object, a need for activities;
- initiate the determined activities, comprising releasing floatable foam from the foam container into an area on or in close proximity of the at least one body or object, such that the floatable foam transforms from liquid to solid form, while releasing the recognizable device capable of assisting in a second localization of the at least one body or object, based on data, captured by the recognizable device, so that the recognizable device is incorporated into the floatable foam, and
- wirelessly exchanging data with the recognizable device.

3. The UAV (500a) according to claim 2, wherein the instructions (520) comprise instructions (520) causing the UAV (500a) to initiate the determination at least partly based on at least one of: data captured by a camera, and sound captured by a microphone.

4. The UAV (500a) according to any of claims 2 or 3, wherein the instructions (520) comprise instructions (520) causing the UAV (500a) to execute the determination by:
- collecting data from the context of the at least one body or object;
- evaluating the collected data, and
- determining, based on the evaluation, that the floatable foam and the recognizable means are needed for the at least one body or object.

5. The UAV (500a) according to claim 4, wherein the instructions (520) comprise instructions (520) causing the UAV (500a) to determine that the floatable foam and the recognizable means is needed for a group of bodies and/or objects.

6. The UAV (500a) according to claim 5, wherein the instructions (520) comprise instructions (520) causing the UAV (500a) to determine, for each specific group of bodies and/or objects, a suitable amount and a suitable form of the floatable foam.

7. The UAV (500a) according to claim 6, wherein the instructions (520) comprise instructions (520) causing the UAV (500a) to determine suitable amount and form of the floatable foam, based on the acquired data, where the acquired data is indicating at least one of:
- an identity or category of the at least one body or object;
- a geographical distribution of a plurality of bodies and/or objects;
together forming a group of bodies and/or objects;
- a movement pattern of the at least one body or object, and
- meteorological data, indicative of the meteorological status of an area circumventing the at least one body or object.

8. The UAV (500a) according to any of claims 2-7, wherein the recognizable means comprise an active, recognizable device and wherein the instructions (520) comprise instructions (520) causing the UAV (500a) to initiate activities, including activation of the active, recognizable device.

9. The UAV (500a) according to claim 8, wherein the instructions (520) comprise instructions (520) causing the UAV (500a) to activate functionality of the active, recognizable device, wherein the active functionality comprise at least one of:
- stroboscopic functionality;
- LED functionality;
- radio communication functionality, and
- transponder functionality.

10. The UAV (500a) according to claim 9, wherein the instructions (520) comprise instructions (520) causing the UAV (500a) to initiate acquiring of additional data, for the purpose of determining at least one of:
- a unique identity or category of the specific body or object or group of bodies and/or objects, for which the activities have been initiated;
- a physical status of the specific body or group of bodies, for which the activities have been initiated;
- the number of bodies and/or objects within a group of bodies and/or objects, for which the activities have been initiated;
- a geographical location where the activities have been initiated;
- time and date when the activities have been initiated, and
a meteorological status when the activities have been initiated.

11. The UAV (500a) according to claim 10, wherein the instructions (520) comprise instructions (520) causing the UAV (500a) to initiate transmission, of at least some of the acquired data from the recognizable device to the UAV (500a).

12. The UAV (500a) according to claim 10 to 11, wherein the instructions (520) comprise instructions (520) causing the UAV (500a) to initiate storage of the acquired data.

13. The UAV (500a) according to claim 10-12, wherein the instructions (520) comprise instructions (520) causing the UAV (500a) to:
- navigate the UAV towards a location where the UAV is experiencing radio connectivity, and
- providing at least part of the acquired data via the radio connectivity.

14. The UAV (500a) according to any of claims 2-13, wherein the instructions (520) comprise instructions (520) causing the UAV (500a) to analyze at least part of the acquired data by applying Machine Learning.

15. A computer program (520) comprising computer readable instructions (520), which when run by processing circuitry (505) of a UAV (500a) according to any of claims 2 - 14,
- initiate a first localization of at least one body or object;
- initiate an analysis, for determining, at least partly based on the first localization of the at least one body or object, a need for activities;
- initiate the determined activities, comprising releasing floatable foam from a foam container into an area on or in close proximity to the at least one body or object, such that the floatable foam transforms from liquid to solid form, while releasing a recognizable device capable of assisting in a second localization of the at least one body or object, based on data, captured by the recognizable device, so that the recognizable device is incorporated into the floatable foam, and
- wirelessly exchange data with the recognizable device.

16. A computer program product (525) comprising a computer program (520) according to claim 15.

## Patentansprüche

1. Verfahren unter Verwendung eines unbemannten Luftfahrzeugs (UAV) zur Unterstützung bei einer Rettungsmission, wobei das UAV Folgendes durchführt:
- Initiieren (300) einer ersten Lokalisierung mindestens eines Körpers oder Objekts;
- Initiieren (305) einer Analyse zum Bestimmen eines Bedarfs an Aktivitäten zumindest teilweise basierend auf der ersten Lokalisierung des mindestens einen Körpers oder Objekts;
- Initiieren (310) der bestimmten Aktivitäten, die Freisetzen von schwimmfähigem Schaum aus einem Schaumbehälter in einen Bereich auf oder in unmittelbarer Nähe zu dem mindestens einen Körper oder Objekt umfassen, so dass der schwimmfähige Schaum von flüssiger in feste Form übergeht, während eine erkennbare Vorrichtung freigesetzt wird, die in der Lage ist, basierend auf Daten, die von der erkennbaren Vorrichtung erfasst werden, eine zweite Lokalisierung des mindestens einen Körpers oder Objekts zu unterstützen, so dass die erkennbare Vorrichtung in den schwimmfähigen Schaum integriert wird, und
- drahtloses Austauschen von Daten mit der erkennbaren Vorrichtung.

2. Unbemanntes Luftfahrzeug (UAV) (500a) zur Unterstützung bei einer Rettungsmission, wobei das UAV (500a) einen Schaumbehälter, der in der Lage ist, schwimmfähigen Schaum aufzunehmen, Erfassungsmittel (530) und eine erkennbare Vorrichtung umfasst,
wobei das UAV ferner Verarbeitungsschaltungsanordnung (505) und einen Speicher (515) umfasst, der Anweisungen (520) speichert, die bei Ausführung durch die Verarbeitungsschaltungsanordnung (505) das UAV (500a) zu Folgendem veranlassen:
- Initiieren einer ersten Lokalisierung mindestens eines Körpers oder Objekts;
- Initiieren einer Analyse zum Bestimmen eines Bedarfs an Aktivitäten zumindest teilweise basierend auf der Lokalisierung des mindestens einen Körpers oder Objekts;
- Initiieren der bestimmten Aktivitäten, die Freisetzen von schwimmfähigem Schaum aus dem Schaumbehälter in einen Bereich auf oder in unmittelbarer Nähe des mindestens einen Körpers oder Objekts umfassen, so dass der schwimmfähige Schaum von flüssiger in feste Form übergeht, während die erkennbare Vorrichtung freigesetzt wird, die in der Lage ist, basierend auf Daten, die von der erkennbaren Vorrichtung erfasst werden, eine zweite Lokalisierung des mindestens einen Körpers oder Objekts zu unterstützen, so dass die erkennbare Vorrichtung in den schwimmfähigen Schaum integriert wird, und
- drahtloses Austauschen von Daten mit der erkennbaren Vorrichtung.

3. UAV (500a) nach Anspruch 2, wobei die Anweisungen (520) Anweisungen (520) umfassen, die das UAV (500a) veranlassen, die Bestimmung zumindest teilweise basierend auf mindestens einem von Folgendem zu initiieren: Daten, die von einer Kamera erfasst werden, und Ton, der von einem Mikrofon erfasst wird.

4. UAV (500a) nach Anspruch 2 oder 3, wobei die Anweisungen (520) Anweisungen (520) umfassen, die das UAV (500a) veranlassen, die Bestimmung auszuführen durch:
- Sammeln von Daten aus dem Kontext des mindestens einen Körpers oder Objekts;
- Auswerten der gesammelten Daten und
- Bestimmen basierend auf der Auswertung, dass der schwimmfähige Schaum und die erkennbaren Mittel für den mindestens einen Körper oder das mindestens eine Objekt benötigt werden.

5. UAV (500a) nach Anspruch 4, wobei die Anweisungen (520) Anweisungen (520) umfassen, die das UAV (500a) veranlassen, zu bestimmen, dass der schwimmfähige Schaum und die erkennbaren Mittel für eine Gruppe von Körpern und/oder Objekten benötigt werden.

6. UAV (500a) nach Anspruch 5, wobei die Anweisungen (520) Anweisungen (520) umfassen, die das UAV (500a) veranlassen, für jede spezifische Gruppe von Körpern und/oder Objekten eine geeignete Menge und eine geeignete Form des schwimmfähigen Schaums zu bestimmen.

7. UAV (500a) nach Anspruch 6, wobei die Anweisungen (520) Anweisungen (520) umfassen, die das UAV (500a) veranlassen, eine geeignete Menge und Form des schwimmfähigen Schaums basierend auf den gewonnenen Daten zu bestimmen, wobei die gewonnenen Daten mindestens eines von Folgendem angeben:
- eine Identität oder Kategorie des mindestens einen Körpers oder Objekts;
- eine geografische Verteilung einer Mehrzahl von Körpern und/oder Objekten, die zusammen eine Gruppe von Körpern und/oder Objekten bilden;
- ein Bewegungsmuster des mindestens einen Körpers oder Objekts; und
- meteorologische Daten, die den meteorologischen Zustand eines Bereichs angeben, der den mindestens einen Körper oder des mindestens eine Objekt abgrenzt.

8. UAV (500a) nach einem der Ansprüche 2-7, wobei die erkennbaren Mittel eine aktive, erkennbare Vorrichtung umfassen und wobei die Anweisungen (520) Anweisungen (520) umfassen, die das UAV (500a) veranlassen, Aktivitäten zu initiieren, die die Aktivierung der aktiven, erkennbaren Vorrichtung umfassen.

9. UAV (500a) nach Anspruch 8, wobei die Anweisungen (520) Anweisungen (520) umfassen, die das UAV (500a) veranlassen, Funktionalität der aktiven, erkennbaren Vorrichtung zu aktivieren, wobei die aktive Funktionalität mindestens eine von folgenden umfasst:
- stroboskopische Funktionalität;
- LED-Funktionalität;
- Funkkommunikationsfunktionalität und
- Transponderfunktionalität.

10. UAV (500a) nach Anspruch 9, wobei die Anweisungen (520) Anweisungen (520) umfassen, die das UAV (500a) veranlassen, Gewinnung zusätzlicher Daten zu initiieren, um mindestens eines von Folgendem zu bestimmen:
- eine eindeutige Kennung oder Kategorie des spezifischen Körpers oder Objekts oder der spezifischen Gruppe von Körpern und/oder Objekten, für die die Aktivitäten initiiert wurden;
- einen physischen Zustand des spezifischen Körpers oder der spezifischen Gruppe von Körpern, für die die Aktivitäten initiiert wurden;
- eine Anzahl von Körpern oder Objekten innerhalb einer Gruppe von Körpern und/oder Objekten, für die die Aktivitäten initiiert wurden;
- einen geografischen Ort, an dem die Aktivitäten initiiert wurden;
- Zeit und Datum, als die Aktivitäten initiiert wurde; und
- einen meteorologischen Zustand, als die Aktivitäten initiiert wurden.

11. UAV (500a) nach Anspruch 10, wobei die Anweisungen (520) Anweisungen (520) umfassen, die das UAV (500a) veranlassen, Übertragung zumindest einiger der gewonnenen Daten von der erkennbaren Vorrichtung an das UAV (500a) zu initiieren.

12. UAV (500a) nach Anspruch 10 oder 11, wobei die Anweisungen (520) Anweisungen (520) umfassen, die das UAV (500a) veranlassen, die gewonnenen Daten zu speichern.

13. UAV (500a) nach Anspruch 10 oder 12, wobei die Anweisungen (520) Anweisungen (520) umfassen, die das UAV (500a) zu Folgendem veranlassen:
- Navigieren des UAV an einen Ort, an dem das UAV Funkkonnektivität wahrnimmt, und
- Bereitstellen zumindest eines Teils der gewonnen Daten über die Funkkonnektivität.

14. UAV (500a) nach einem der Ansprüche 2-13, wobei die Anweisungen (520) Anweisungen (520) umfassen, die das UAV (500a) veranlassen, zumindest einen Teil der gewonnenen Daten durch Anwenden maschinellen Lernens zu analysieren.

15. Computerprogramm (520), umfassend computerlesbare Anweisungen (520), die bei Ausführung durch Verarbeitungsschaltungsanordnung (505) eines UAV (500a) nach einem der Ansprüche 2-14 Folgendes bewirken:
- Initiieren einer ersten Lokalisierung mindestens eines Körpers oder Objekts;
- Initiieren einer Analyse zum Bestimmen eines Bedarfs an Aktivitäten zumindest teilweise basierend auf der ersten Lokalisierung des mindestens einen Körpers oder Objekts;
- Initiieren der bestimmten Aktivitäten, die Freisetzen von schwimmfähigem Schaum aus einem Schaumbehälter in einen Bereich auf oder in unmittelbarer Nähe zu dem mindestens einen Körper oder Objekt, so dass der schwimmfähige Schaum von flüssiger in feste Form übergeht, während eine erkennbare Vorrichtung freigesetzt wird, die in der Lage ist, basierend auf Daten, die von der erkennbaren Vorrichtung erfasst werden, eine zweite Lokalisierung des mindestens einen Körpers oder Objekts zu unterstützen, so dass die erkennbare Vorrichtung in den schwimmfähigen Schaum integriert wird, und
- drahtloses Austauschen von Daten mit der erkennbaren Vorrichtung.

16. Computerprogrammprodukt (525), umfassend ein Computerprogramm (520) nach Anspruch 15.

## Revendications

1. Procédé d'utilisation d'un drone (UAV), pour aider à une mission de sauvetage, dans lequel l'UAV :
- initie (300) une première localisation d'au moins un corps ou un objet ;
- initie (305) une analyse, pour déterminer, au moins en partie sur la base de la première localisation de l'au moins un corps ou un objet, un besoin d'activités ;
- initie (310) les activités déterminées, comprenant la libération d'une mousse flottante depuis un récipient de mousse dans une zone sur ou en étroite proximité de l'au moins un corps ou un objet, de sorte que la mousse flottante se transforme d'une forme liquide en une forme solide tout en libérant un dispositif reconnaissable capable d'aider à une deuxième localisation de l'au moins un corps ou un objet sur la base de données capturées par le dispositif reconnaissable, de sorte que le dispositif reconnaissable soit incorporé dans la mousse flottante, et
- l'échange sans fil de données avec le dispositif reconnaissable.

2. Drone (UAV) (500a) pour aider à une mission de sauvetage, l'UAV (500a) comprenant un récipient de mousse capable de contenir une mousse flottante, des moyens de capture (530) et un dispositif reconnaissable,
l'UAV comprenant en outre une circuiterie de traitement (505) et une mémoire (515), stockant des instructions (520) qui, lorsqu'elles sont exécutées par la circuiterie de traitement (505), amènent l'UAV (500a) à :
- initier une première localisation d'au moins un corps ou un objet ;
- initier une analyse, pour déterminer, au moins en partie sur la base de la localisation de l'au moins un corps ou un objet, un besoin d'activités ;
- initier les activités déterminées, comprenant la libération d'une mousse flottante depuis le récipient de mousse dans une zone sur ou en étroite proximité de l'au moins un corps ou un objet, de sorte que la mousse flottante se transforme d'une forme liquide en une forme solide tout en libérant le dispositif reconnaissable capable d'aider à une deuxième localisation de l'au moins un corps ou un objet sur la base de données capturées par le dispositif reconnaissable, de sorte que le dispositif reconnaissable soit incorporé dans la mousse flottante, et
- échanger sans fil des données avec le dispositif reconnaissable.

3. UAV (500a) selon la revendication 2, dans lequel les instructions (520) comprennent des instructions (520) amenant l'UAV (500a) à initier la détermination au moins en partie sur la base d'au moins l'un parmi : des données capturées par une caméra, et un son capturé par un microphone.

4. UAV (500a) selon la revendication 2 ou 3, dans lequel les instructions (520) comprennent des instructions (520) amenant l'UAV (500a) à exécuter la détermination par :
- la collecte de données depuis le contexte de l'au moins un corps ou un objet ;
- l'évaluation des données collectées, et
- la détermination, sur la base de l'évaluation, que la mousse flottante et le dispositif reconnaissable sont nécessaires pour l'au moins un corps ou un objet.

5. UAV (500a) selon la revendication 4, dans lequel les instructions (520) comprennent des instructions (520) amenant l'UAV (500a) à déterminer que la mousse flottante et le dispositif reconnaissable sont nécessaires pour un groupe de corps et/ou d'objets.

6. UAV (500a) selon la revendication 5, dans lequel les instructions (520) comprennent des instructions (520) amenant l'UAV (500a) à déterminer, pour chaque groupe spécifique de corps et/ou d'objets, une quantité appropriée et une forme appropriée de la mousse flottante.

7. UAV (500a) selon la revendication 6, dans lequel les instructions (520) comprennent des instructions (520) amenant l'UAV (500a) à déterminer une quantité appropriée et une forme appropriée de la mousse flottante sur la base des données acquises, les données acquises indiquant au moins l'un parmi :
- une identité ou une catégorie de l'au moins un corps ou un objet ;
- une répartition géographique d'une pluralité de corps et/ou d'objets formant ensemble d'un groupe de corps et/ou d'objets ;
- un motif de déplacement de l'au moins un corps ou un objet, et
- des données météorologiques indiquant les conditions météorologiques d'une zone contournant l'au moins un corps ou un objet.

8. UAV (500a) selon l'une quelconque des revendications 2 à 7, dans lequel le dispositif reconnaissable comprend un dispositif reconnaissable actif, et dans lequel les instructions (520) comprennent des instructions (520) amenant l'UAV (500a) à initier des activités, incluant une activation du dispositif reconnaissable actif.

9. UAV (500a) selon la revendication 8, dans lequel les instructions (520) comprennent des instructions (520) amenant l'UAV (500a) à activer une fonctionnalité du dispositif reconnaissable actif, dans lequel la fonctionnalité active comprend au moins l'une parmi :
- une fonctionnalité stroboscopique ;
- une fonctionnalité de LED ;
- une fonctionnalité de communication radio, et
- une fonctionnalité de transpondeur.

10. UAV (500a) selon la revendication 9, dans lequel les instructions (520) comprennent des instructions (520) amenant l'UAV (500a) à initier l'acquisition de données supplémentaires dans le but de déterminer au moins l'un parmi :
- une identité ou catégorie unique du corps ou objet spécifique ou du groupe de corps et/ou d'objets pour lesquels les activités ont été initiées ;
- un état physique du corps spécifique ou du groupe de corps pour lesquels les activités ont été initiées ;
- le nombre de corps et/ou d'objets à l'intérieur d'un groupe de corps et/ou d'objets pour lesquels les activités ont été initiées ;
- un emplacement géographique auquel les activités ont été initiées ;
- une heure et une date auxquelles les activités ont été initiées, et
- des conditions météorologiques lorsque les activités ont été initiées.

11. UAV (500a) selon la revendication 10, dans lequel les instructions (520) comprennent des instructions (520) amenant l'UAV (500a) à initier une transmission d'au moins certaines des données acquises depuis le dispositif reconnaissable à l'UAV (500a).

12. UAV (500a) selon les revendications 10 et 11, dans lequel les instructions (520) comprennent des instructions (520) amenant l'UAV (500a) à initier un stockage des données acquises.

13. UAV (500a) selon les revendications 10 à 12, dans lequel les instructions (520) comprennent des instructions (520) amenant l'UAV (500a) à :
- faire naviguer l'UAV vers un emplacement auquel l'UAV bénéficie d'une connectivité radio, et
- fournir au moins une partie des données acquises via la connectivité radio.

14. UAV (500a) selon l'une quelconque des revendications 2 à 13, dans lequel les instructions (520) comprennent des instructions (520) amenant l'UAV (500a) à analyser au moins une partie des données acquises par l'application d'un apprentissage automatique.

15. Programme informatique (520) comprenant des instructions lisibles par ordinateur (520) qui, lorsqu'elles sont exécutées par une circuiterie de traitement (505) d'un UAV (500a) selon l'une quelconque des revendications 2 à 14,
- initient une première localisation d'au moins un corps ou un objet ;
- initient une analyse, pour déterminer, au moins en partie sur la base de la première localisation de l'au moins un corps ou un objet, un besoin d'activités ;
- initient les activités déterminées, comprenant la libération d'une mousse flottante depuis un récipient de mousse dans une zone sur ou en étroite proximité de l'au moins un corps ou un objet, de sorte que la mousse flottante se transforme d'une forme liquide en une forme solide tout en libérant un dispositif reconnaissable capable d'aider à une deuxième localisation de l'au moins un corps ou un objet sur la base de données capturées par le dispositif reconnaissable, de sorte que le dispositif reconnaissable soit incorporé dans la mousse flottante, et
- échangent sans fil des données avec le dispositif reconnaissable.

16. Produit de programme informatique (525) comprenant un programme informatique (520) selon la revendication 15.
